# EUROPEAN PATENT APPLICATION

(11) **EP 2 187 171 A1**
(43) Date of publication of application: **19.05.2010**
(21) Application number: 09167887.0
(22) Date of filing: 14.08.2009
(51) Int. Cl.: G01C 21/34, G06Q 30/00

(54) **Dynamic consuming information navigation system and method**

(30) Priority: 13.11.2008 TW 97143964
(71) Applicant: Supa Technology Co., Ltd., Taipei City 115 (TW)
(72) Inventor: Chen, Jeong-Shiun, Taipei 115 (TW)
(74) Representative: Gee, Steven William

(57) **Abstract**

A dynamic consuming information navigation system includes a computer information unit, an internet, a service platform and a PND. The computer information unit and the internet are provided for uploading information of a vendor, e.g. positioning coordinates and basic information, to the service platform, so as to set up a database of vendor information. The PND is adapted for transmitting present positioning coordinate information via a base station to the service platform. The service platform compares the present positioning coordinate information with the database of the vendor information, and then sends a list of the nearby vendors back to the PND. Thus, the PND provides the dynamic consuming information navigation.

## Description

### BACKGROUND OF THE INVENTION

### 1. Field of the Invention

The present invention relates generally to dynamic consuming information navigation system and method, and more particularly, to a mobile communication system adapted for providing instant information of vendors within a specific area.

### 2. The Prior Arts

Global positioning system (GPS) was initially restrictedly used for military or industrial purposes; however, GPS has been available for civil users over past two decades. Commercialized GPS products in the market consists of, but are not limited to, GPS receivers adapted for different purposes, such as aeronautic GPS receivers and marine GPS receivers, car navigation equipments and handheld GPS receivers used for mountain-climbing or hiking. Similar to an ordinary mobile phone or personal digital assistant (PDA), a conventional handheld GPS product typically includes interior components, such as an antenna, a chipset and a battery, and exterior components, such as a keypad, an LCD panel, etc.

In general, a GPS equipped device is capable of receiving signals from the 24 to 32 satellites orbiting the Earth. The signals from at least three satellites are required to determine coordinates, latitude and longitude, of the device. When the device receives the signals transmitted from the satellites, the location of the device is calculated and displayed on an electronic map of the navigation system. The navigation system then provides an optimal driving route and displays the route on the electronic map on a screen of the navigation system. The displayed information may include the current position of the user, the route to the destination, and the distance from the current position to the destination.

Currently, a portable navigation device (PND) not only serves as automotive navigation system, but also provides a built-in database that can search points of interest and vendors. The search function becomes very helpful at times of travel. For example, during a road trip, travelers may find themselves in an unfamiliar area. When the time comes for dinner and nicer restaurants are not at reach, the PND pre-loaded information comes to use for search of more favorable dining location and even displays the navigation route on the map. In case of an emergency, the user can also promptly obtain information of the nearby gas stations, police stations, hospitals, repair facilities or road services in a similar manner. Therefore, the PNDs with such functions can provide the travelers with a more relaxed and secure feeling to any journey.

However, the conventional PNDs can only provide static information. In other words, the built-in database containing the vendors, tourism sites, and other information for enquiry can not be updated once loaded in the PNDs. As such, when a discount promotion expires or even a vendor is already out of business, the user will not be aware until arriving at the destination. Furthermore, when guided by the non-updated database, users will inevitably miss out newly opened stores within the area. Consequently, it results in costing more time, gas and money in order to find and reach a desired vendor thus undermining the assertion of the user relying upon the PND. As such, a dynamic consuming information navigation system becomes highly desirable.

### SUMMARY OF THE INVENTION

A primary objective of the present invention is to provide a dynamic consuming information navigation system that overcomes the disadvantages of conventional systems. The dynamic consuming information navigation system according to the present invention includes a computer information unit, an internet, a service platform and a portable navigation device (PND). The computer information unit along with the internet allows for uploading vendor information, such as positioning coordinates and basic information, to the service platform for constructing a vendors' database. The PND is adapted for transmitting a present positioning coordinate signal via the cellular phone base station to the service platform. The service platform then computes the retrieved coordinates and locates information from the vendors' database regarding vendors within the area. Subsequently, the located information is returned to the PND allowing the users to acquire the most up-to-date information thus achieving the dynamic consuming information navigation.

Another objective of the present invention is to provide a dynamic consuming information navigating method that overcomes the disadvantages of conventional technology. The dynamic consuming information navigation method according to the present invention includes the following steps. First, positioning coordinates and basic information of a plurality of vendors are uploaded via an internet to a service platform. The service platform saves the positioning coordinates and basic information uploaded by the vendors into a database of vendor information. When receiving a user coordinate information from a PND, the service platform compares the user coordinate information with the database of the vendor information, thus searching information of vendors located near the user, and transmitting the searched information to the PND of the user. In such a way, the dynamic consuming information navigating method is achieved.

As discussed above, the dynamic consuming information navigation method is adapted for solving the problems of the conventional technology, and promptly and conveniently transmitting the vendor information to the PND. In such a way, a PND preliminarily serving as a navigator can be further upgraded into a dynamic consuming information navigation service system.

### BRIEF DESCRIPTION OF THE DRAWINGS

The present invention will be apparent to those skilled in the art by reading the following detailed description of a preferred embodiment thereof, with reference to the attached drawings, in which:

Fig. 1 is a schematic diagram illustrating a structure of a dynamic consuming information navigation system according to an embodiment of the present invention;

Fig. 2 is a flow chart illustrating a process of setting up a database of vendor information of a dynamic consuming information navigation system according to the present invention; and

Fig. 3 is a flow chart illustrating the operation of the dynamic consuming information navigation system according to the present invention.

### DETAILED DESCRIPTION OF THE PREFERRED EMBODIMENT

The accompanying drawings are included to provide a further understanding of the invention, and are incorporated in and constitute a part of this specification. The drawings illustrate an embodiment of the invention and, together with the description, serve to explain the principles of the invention.

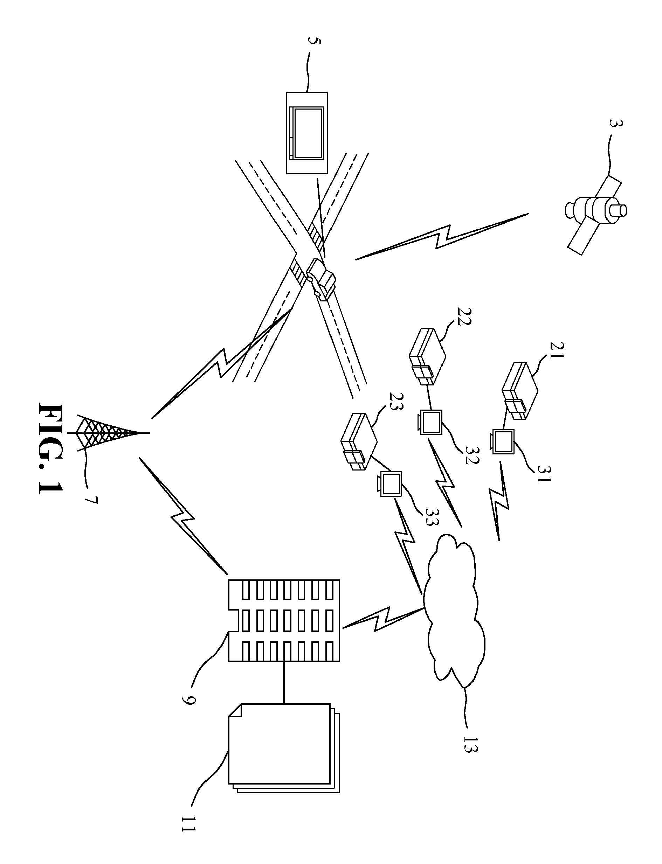

Fig. 1 is a schematic diagram illustrating a structure of a dynamic consuming information navigation system according to an embodiment of the present invention. Referring to Fig. 1, the dynamic consuming information navigation system includes a global positioning system (GPS) 3, a portable navigation device (PND) 5, a base station 7, a service platform 9, a database 11 of vendor information, an internet 13, a plurality of vendors 21, 22, and 23, and a plurality of computer information units 31, 32, and 33 respectively corresponding to the vendors 21, 22, and 23. The vendors 21, 22, and 23 respectively upload desired information, such as store coordinates (longitude and latitude), basic information and promotional information, thereof from the computer information units 31, 32 and 33 to the service platform 9 via the internet 13. The service platform 9 saves the information of the vendors 21, 22, and 23 into the database 11.

The PND 5 receives satellite positioning signals, thus obtaining coordinate information of the present position of a user. The coordinate information of the present position of the user is then transmitted through the base station 7 to the service platform 9. The service platform 9 automatically calculates and compares the coordinate information of the user with the vendor information saved in the database 11, as to obtain information of vendors near the present position of the user. The service platform 9 then transmits the information of the vendors near the present position of the user to the PND 5.

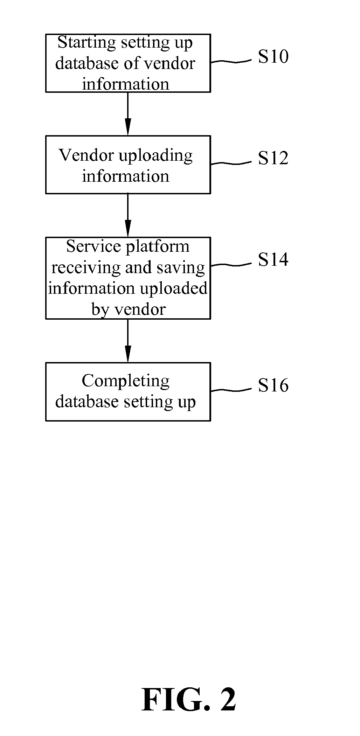

Fig. 2 is a flow chart illustrating a process of setting up a database of vendor information of a dynamic consuming information navigation system according to the present invention. Referring to Figs. 1 and 2, the present invention provides a dynamic consuming information navigating method. According to the dynamic consuming information navigating method, a plurality of vendors 21, 22, and 23 upload the information, e.g. positioning coordinates, basic information and promotional information thereof via the internet 13 to the service platform 9. The service platform 9 saves the store coordinates, basic information and promotional information of the vendors 21, 22, and 23 in the database 11.

Referring to Fig. 2, the process of setting up the database of vendor information includes the following steps. At step S10, the process starts to set up the database 11 of vendor information. At the next step S12, the vendors 21, 22, and 23 respectively upload the positioning coordinates, basic information and promotional information from the computer information units 31, 32 and 33 via the internet 13 to the service platform 9. At the next step S 14, the service platform 9 saves the positioning coordinates, basic information and promotional information of the vendors 21, 22, and 23 in the database 11. Then, the process goes to the step S16, the database 11 is set up.

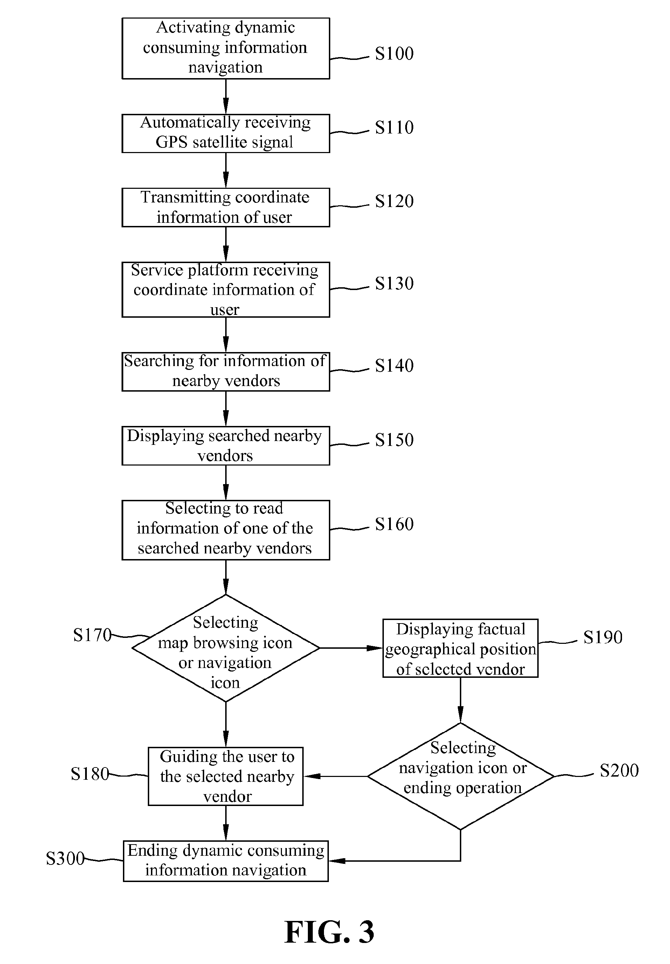

Fig. 3 is a flow chart illustrating the operation of the dynamic consuming information navigation system according to the present invention. The dynamic consuming information navigation method according to the present invention further includes the following steps. At the step S100, the dynamic consuming information navigation is activated. Then, at the step S110, the user turns on the PND 5 for automatically receiving satellite signals from the GPS 3, thus generating the coordinate information of the present position of the user. Then, at the next step S120, the PND 5 transmits the coordinate information of the present position via the base station 7 to the service platform 9 in accordance with a suitable communication protocol.

The suitable communication protocol is preferably the general packet radio service (GPRS). The GPRS is a mobile data service which can be used by users of global system for mobile communications (GSM) mobile phones. As such, by means of the GPRS network communication, the PND 5 can periodically transmit the positioning coordinate information of the PND 5 to the service platform 9. The duration time of transmitting the positioning coordinate information of the PND 5 has been pre-set as default.

Then, the method goes to step S130 where the service platform 9 receives the coordinate information of the present position of the user, and compares the coordinate information with the vendor information saved in the database 11. Next, at the step S140, the service platform 9 searches for the vendors that are located within a predetermined distance from the PND 5 and transmits the search result including the positioning coordinate information, basic information and promotional information of the vendors that are located within the predetermined distance from the PND 5 to the PND 5 of the user. The predetermined distance can be set with different searching ranges in accordance with the local geographic environment or local population density. For example, when the user is driving in a town having stores and shopping malls densely distributed, the user may obtain sufficient information when setting the search range as 1 kilometer or 500 meters, or even less. However, when the user is driving in the countryside or mountainous areas, the user may have to set the search range as 5 kilometers, 10 kilometers, or even larger, for conveniently accessing the information of those nearby vendors.

Then, at the step S150, the PND 5 displays an icon of local specials with a refreshing frequency, and maintains the icon for a predetermined time. The refreshing frequency is preferred to be once per minute to once per three minutes, and the displaying time can be set by the PND 5 and is preferred to be 5 to 30 seconds. The user selects the icon of the local specials on the PND 5, and then the PND 5 displays a list of the nearby vendors and promotional information of the nearby vendor. At the next step S160, the user selects one of the nearby vendors. The PND 5 then displays a navigation icon, a map browsing icon and information of the selected vendor, such as name of the vendor, business hours, business mode, address, phone number, promotional information, etc. Then, at the step S 170, the user selects the navigation icon or the map browsing icon. Selecting the navigation icon would result to the step S180, otherwise selecting the map browsing icon leads to the step S 190.

At the step S 180, the PND 5 guides the user to the selected vendor. Then the operation goes to the step S300 where the dynamic consuming information navigation is ended. At the step S190, the PND 5 displays the factual geographical position of the selected vendor, and then the operation goes to the step S200. At the step S200, if the user selects the navigation icon, go to the step S 180, and if the user selects to end the operation, the flow goes to the step S300 to end the dynamic consuming information navigation.

Although the present invention has been described with reference to the preferred embodiments thereof, it is apparent to those skilled in the art that a variety of modifications and changes may be made without departing from the scope of the present invention which is intended to be defined by the appended claims.

## Claims

1. A dynamic consuming information navigation system, comprising:
a plurality of computer information units respectively provided by a plurality of vendors for uploading coordinate information, basic information, and promotional information of the vendors to an internet;
a service platform adapted for receiving the coordinate information, the basic information, and the promotional information of the vendors via the internet and setting up a database of vendor information, so as to provide a dynamic consuming information navigation;
a portable navigation device (PND) capable of receiving a positioning information from a global positioning system (GPS) to generate a coordinate information of a present position of a user of the PND and wirelessly transmitting the coordinate information; and
a base station adapted for receiving the coordinate information of the present position of the user transmitted from the PND and transmitting the coordinate information to the service platform,
wherein the service platform receives the coordinate information of the present position of the user and compares the coordinate information with the database of the vendor information so as to obtain coordinate information, basic information, and promotional information of vendors within a predetermined range from the database of the vendor information for transmitting to the PND, and the PND displays an icon of local specials with a predetermined refreshing frequency, and maintains displaying the icon for a predetermined time.

2. The system according to claim 1, wherein the predetermined range is defined as 5 kilometers distant from the present position of the user.

3. The system according to claim 1, wherein the predetermined refreshing frequency ranges from once per minute to once per three minutes.

4. The system according to claim 1, wherein the predetermined time ranges from 5 seconds to 30 seconds, and the predetermined time can be set by the PND.

5. The system according to claim 1, wherein when the icon of the local specials is selected, the PND displays a list of vendors, the list comprising names and promotional information of the vendors; when one of the vendors shown in the list is selected, the vendor information of the vendor and a navigation icon are displayed, the vendor information of the vendor comprising the promotional information offered by the vendor; when the navigation icon is selected, the PND guides the user to the selected vendor.

6. A dynamic consuming information navigation method, adapted for a user to use on a portable navigation device (PND) for achieving a dynamic consuming information navigation, the dynamic consuming information navigation method comprising:
a vendor uploading a vendor information of the vendor to an internet via a computer information unit, wherein the vendor information comprises an address, a basic information, and a promotional information of the vendor;
a service platform receiving the vendor information via the internet for setting up a database of the vendor information;
the user receiving satellite positioning signals of a global positioning system (GPS) by the PND, and the PND generating a coordinate information of a present position of the PND of the user;
the PND transmitting the coordinate information of the present position of the PND of the user to a base station in accordance with a suitable communication protocol, and the base station transmitting the coordinate information to the service platform;
the service platform receiving the coordinate information, searching for the vendors that are within a predetermined distant from the PND from the database of the vendor information according to the coordinate information, and transmitting the addresses, the basic information and the promotional information of the vendors via the base station to the PND;
the PND displaying an icon of local specials with a predetermined refreshing frequency, and maintaining display of the icon for a predetermined time;
the user selecting the icon of the local specials, then the PND displaying a list of the vendors, wherein the list comprises names and promotional information of the vendors;
the user selecting one of the vendors shown on the list, then the PND displaying the vendor information of the selected vendor, a map browsing icon and a navigation icon, wherein the vendor information of the vendor comprises the promotional information offered by the selected vendor; and
the user selecting one of the map browsing icon and the navigation icon, wherein if the map browsing icon is selected, the PND displays a map showing a position of the selected vendor, and if the navigation icon is selected, the PND guides the user to the selected vendor.

7. The method according to claim 6, wherein the suitable communication protocol is the general packet radio service (GPRS) network communication protocol.

8. The method according to claim 6, wherein the predetermined distance is 5 kilometers.

9. The method according to claim 6, wherein the predetermined refreshing frequency ranges from once per minute to once per three minutes.

10. The method according to claim 6, wherein the predetermined time ranges from 5 seconds to 30 seconds, and the predetermined time can be set by the user.
